Europäisches Patentamt

European Patent Office

Office européen des brevets

(11) Veröffentlichungsnummer: **0 353 390**
**A1**

(12) # EUROPÄISCHE PATENTANMELDUNG

(21) Anmeldenummer: **89106718.3**

(22) Anmeldetag: **14.04.89**

(51) Int. Cl.4: **F16C 29/12**

(30) Priorität: **16.07.88 DE 3824192**

(43) Veröffentlichungstag der Anmeldung:
**07.02.90 Patentblatt 90/06**

(84) Benannte Vertragsstaaten:
**DE ES FR GB IT**

(71) Anmelder: **JACOB, Werner**
**Briandring 29**
**D-6000 Frankfurt 70(DE)**

(72) Erfinder: **JACOB, Werner**
**Briandring 29**
**D-6000 Frankfurt 70(DE)**

(74) Vertreter: **Harwardt, Günther, Dipl.-Ing.**
**HARWARDT NEUMANN PATENTANWÄLTE**
**Scheerengasse 2 Postfach 1455**
**D-5200 Siegburg 2(DE)**

(54) **Befestigung für einen Umlaufschuh einer Wälzkörperführung.**

(57) Die Erfindung betrifft eine Fixieranordnung für einen Umlaufschuh 2 einer Wälzkörperumlauffühurung an einem Tragelement 3. Hierzu ist eine Exzenteranordnung vorgesehen, die eine Zylinderbohrung 5 im Umlaufschuh 2, eine in diese eingesetzte Exzenterbuchse 6, einen Zylinderbolzen 9, der einerseits in einer Einsteckbohrung 20 des Tragelementes 3 festgelegt und andererseits in einer zur zylindrischen Außenfläche 8 der Exzenterbuchse 6 exzentrisch in dieser angeordnete Zylinderbolzenbohrung 7 aufgenommen ist, umfaßt. Über einen mit einem Außensechskant 16 versehenen Bund 15 kann der Umlaufschuh 2 in bezug auf die Laufbahnen der Leitschiene 1 verstellt werden und damit eine Spieleinstellung durch Relativverstellung erfolgen. Der Zylinderbolzen 9 weist darüberhinaus einen Gewindeansatz 11 auf, auf den eine Mutter 12 aufschraubbar ist. Durch ein Sicherungsblech 17 ist die Position von Exzenterbuchse 6 und Mutter 12 festlegbar. Zusätzlich ist eine Fixierstiftanordnung mit einem Konus 28 vorgesehen, der in eine entsprechende Konusbohrung 28 des Tragelementes 3 eingreift.

Fig. 2

## Befestigung für einen Umlaufschuh einer Wälzkörperführung

Die Erfindung betrifft eine Befestigung für einen Umlaufschuh einer Wälzkörperführung an einem Tragelement mittels Schrauben zur Verspannung von Umlaufschuh und Tragelement sowie Mitteln zur Fixierung der Einstellposition.

Überlicherweise werden Umlaufschuhe an einem Tragelement dadurch festgelegt, daß die Befestigungsschrauben, deren Schaftdurchmesser kleiner ist, als die Befestigungsbohrung im Umfangsschuh, durch die sie hindurchgeführt sind, zunächst noch vorsichtig angezogen werden, bei gleichzeitigem Ausrichten des Umlaufschuhs bzw. der Wälzkörperreihen gegenüber der Leitschiene durch Verschieben. Dann erfolgt ein endgültiges Festziehen und Verstiften der einmal eingestellten Position durch Anbringen von Paßstiftbohrungen und Einsetzen von Paßstiften. Eine solche Vorgehensweise läßt jedoch keine exakte Spieleinstellung zu.

Zur Verbesserung der Spieleinstellung sind auch Lösungen bekannt, bei denen der Umlaufschuh entsprechend der oben geschilderten Fixierweise zunächst in einer Ungefährposition festgelegt wird. Der Umlaufschuh besitzt jedoch einen Einstellmechanismus, der einen Verformungsbereich und einen Stützbereich umfaßt. Der Anlagebereich der Wälzkörper ist verformbar ausgebildet und kann beispielsweise über Druckschrauben, die sich am Stützbereich abstützen, zur Spieleinstellung verformt werden.

Eine solche Ausbildung ist aufwendig und der Einstellvorgang ist kompliziert.

Der Erfindung liegt daher die Aufgabe zugrunde, eine Befestigung für einen Umlaufschuh vorzuschlagen, die in einfacher Weise eine Spieleinstellung und auch Nachstellung erlaubt und darüber hinaus eine sichere Festlegung in der Einstellposition gewährleistet.

Diese Aufgabe wird erfindungsgemäß dadurch gelöst, daß der Umlaufschuh eine Durchgangsbohrung aufweist, in die eine außen zylindrische Exzenterbuchse eingesetzt ist, die eine Bolzenbohrung besitzt, welche exzentrisch zur zylindrischen Außenfläche der Exzenterbuchse angeordnet ist, wobei ein am Tragelement festgelegter Zylinderbolzen in der Bolzenbohrung passend aufgenommen ist, daß zwei entgegengerichtet zur Durchgangsbohrung versetzte, mit Gewinde versehene Fixierbohrungen vorgesehen sind, in die jeweils ein Fixierstift einschraubbar ist, dessen freies Ende als Konus zum Ende hin verjüngt ausgebildet ist, der mit einer Konusbohrung des Tragelementes in Eingriff bringbar ist, und daß dem Umlaufschuh mindestens eine Befestigungsschraube zugeordnet ist.

Von Vorteil bei dieser Ausbildung ist, daß über die Exzenterbuchse eine exakte Spieleinstellung möglich ist. Die Exzenterbuchse wirkt wie eine Art Waagebalken, der eine genaue Anlage der Wälzkörperreihe an die Leitschiene bewerkstelligt. Über die Fixierstifte und die Befestigungsschraube kann der Umlaufschuh endgültig festgelegt werden. Die Ausbildung der Fixierstifte und die Exzenterverstellung erlauben, daß auch noch nachträglich die Einstellung korrigiert werden kann.

Bevorzugt ist die Exzenterbuchse mit einem Bund mit einer Werkzeugangriffsfläche, insbesondere einem Außensechskant versehen. Hierdurch kann eine Einstellung bzw. Verdrehung der Exzenterbuchse gegenüber dem Zylinderbolzen bzw. der Durchgangsbohrung des Umlaufschuhes über ein Werkzeug erfolgen.

Der Zylinderbolzen ist an einem Ende mit einem Kopf und am anderen Ende, insbesondere dem aus dem Umlaufschuh herausragenden Ende, mit einem Gewindeansatz versehen, auf den eine Mutter aufschraubbar ist. Die Mutter dient zur Sicherung bzw. unterstützt die Anpressung des Umlaufschuhes an das Tragelement.

Zur Sicherung der Position der Exzenterbuchse ist ferner nach der Erfindung vorgesehen, zwischen dem Bund der Exzenterbuchse und der Mutter ein Sicherungsblech auf dem Gewindeansatz anzuordnen, welches zwei Lappen besitzt, von denen einer an einer Werkzeugangriffsfläche des Bundes und der andere an einer Schlüsselfläche der Mutter festgelegt ist.

Um eine exakte Anlage zu erreichen ist, ferner nach der Erfindung vorgeschlagen, die Durchgangsbohrung etwa mittig der Längserstreckung des Umlaufschuhes und die Fixierstifte und die Befestigungsschrauben seitlich dazu versetzt anzuordnen. Hierdurch wird die günstigste Anpassung an die Leitschiene und damit Spieleinstellung sowie Festlegung erreicht.

Ferner ist vorgesehen, die Befestigungsschrauben jeweils zwischen der Durchgangsbohrung und den Fixierstiften anzuordnen. Dies bewirkt einen günstigen Hebelarm für den Angriff der Fixierstifte.

In weiterer Ausgestaltung ist vorgeschlagen, daß der Umlaufschuh für die Fixierstifte eine Fixierbohrung besitzt, welche einen Gewindeabschnitt und einen zylindrischen Führungsabschnitt umfaßt, und daß der Fixierstift seinem Konus benachbart zunächst einen zum Führungsabschnitt passenden Führungsschaftabschnitt und einen Gewindeschaftabschnitt aufweist. Der Führungsschaftabschnitt liegt in dem Führungsabschnitt an und sorgt dafür, daß eine gute Unterstützung des Konusabschnittes und damit starre verbindung erzielt werden kann.

Zur Erzielung eines günstigen Verstellbereiches ist vorgesehen, daß der größte Durchmesser der Konusbohrung im Tragelement mindestens so groß ist, wie der größte Durchmesser des dem Fixierstift zugehörigen Konus. Hierdurch werden Toleranzen überbrückt. Der Verstellbereich wird vergrößert.

Schließlich wird nach der Erfindung die Verwendung des erfindungsgemäßen Umlaufschuhs in einer Linearführungsanordnung, die mindestens zwei Umlaufschuhe umfaßt, vorgeschlagen, wobei gegenüber dem verstellbaren Umlaufschuh ein nicht einstellbar starr am Tragelement befestigter Umlaufschuh vorgesehen ist.

Ein bevorzugtes Ausführungsbeispiel der Erfindung ist in der Zeichnung schematisch dargestellt.

Es zeigt

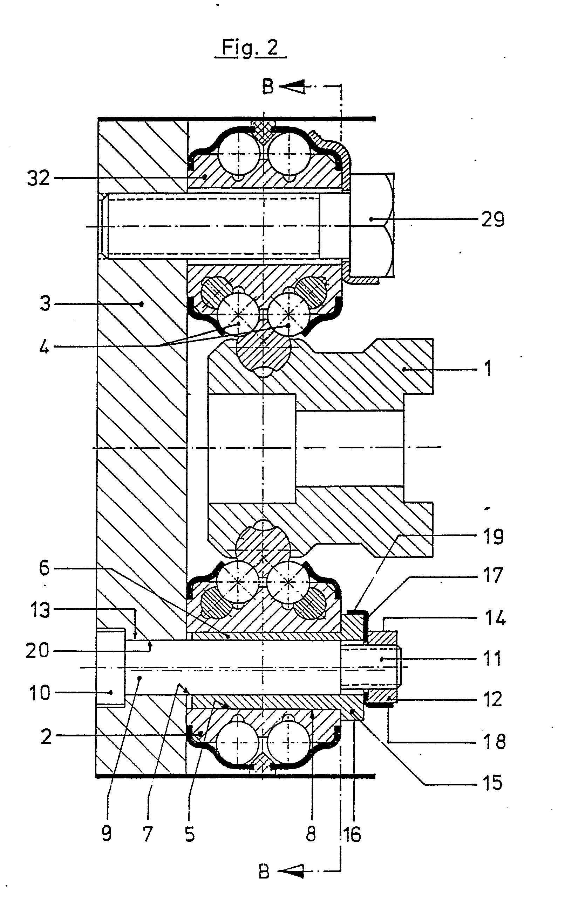

Fig. 1 einen Schnitt B-B gemäß Figur 2,

Fig. 2 einen Schnitt A-A gemäß Figur 1,

Fig. 3 eine Draufsicht auf einen einzelnen Umlaufschuh mit eingesetzten Befestigungselementen, und

Fig. 4 einen Schnitt C-C gemäß Figur 3.

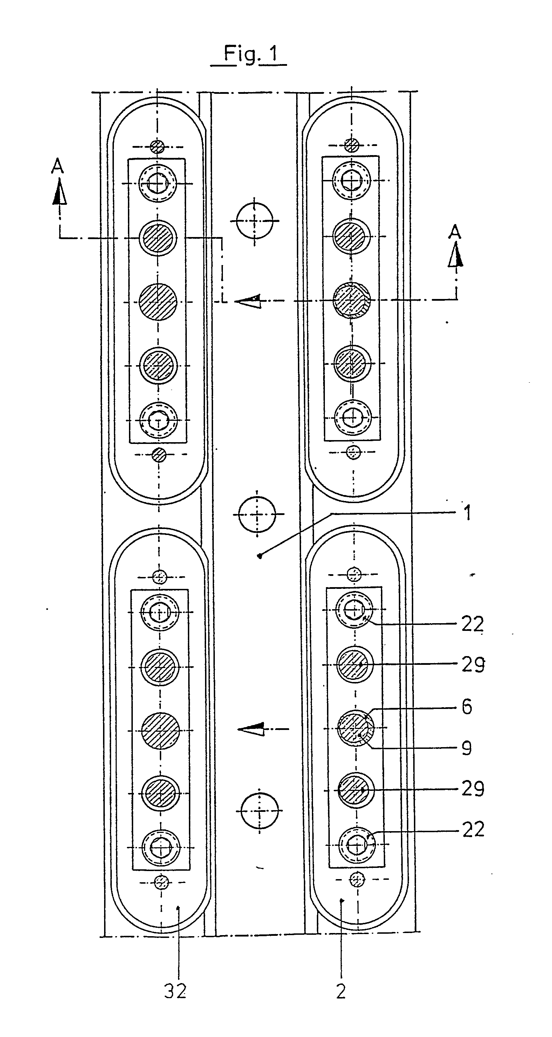

In Figur 1 ist eine Linearführungsanordnung dargestellt, bei der einer Leitschiene 1 vier an einem Tragelement 3 angebrachte Umlaufschuhe 2, 32 zugeordnet sind.

Jeweils zwei Umlaufschuhe 32 sind ortsfest angeordnet, d.h. sie werden in der üblichen Art und Weise über eine Stiftverbindung und Befestigungsschrauben festgelegt. Diesen fest angeordneten Umlaufschuhen 32 sind gegenüberliegend jeweils ein Umlaufschuh 2 zugeordnet, welche zur Spieleinstellung ausgebildet sind.

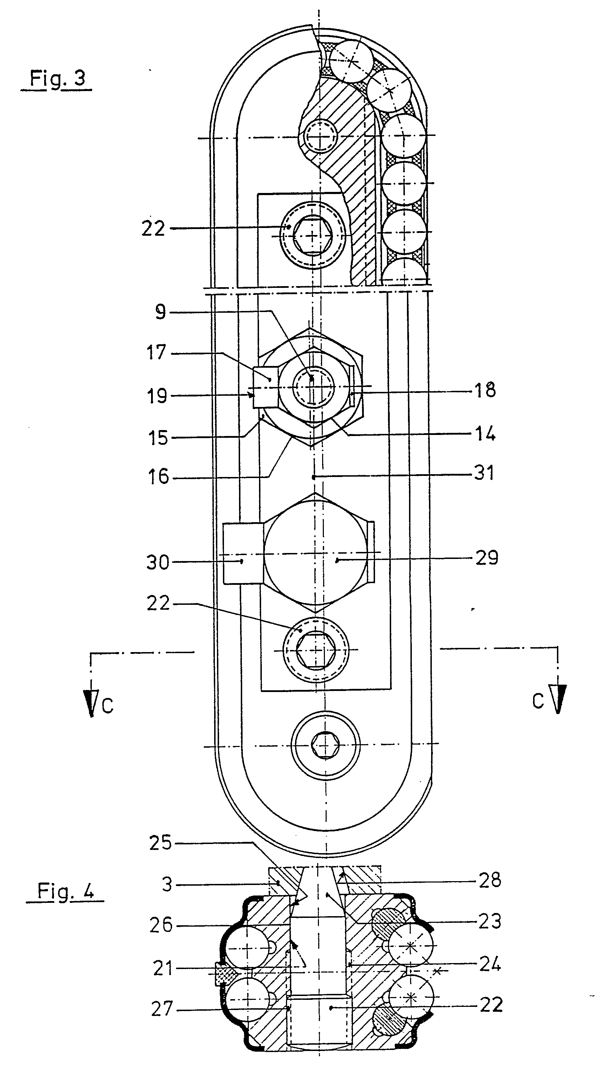

Die Ausbildung der Befestigung der Umlaufschuhe 2 ist aus den Zeichnungsfiguren 2 bis 4 ersichtlich. Der Umlaufschuh 2 dient zur Führung von Wälzkörpern 4, welche beim vorliegenden Ausführungsbeispiel als Kugeln ausgebildet sind. Die Wälzkörper 4 sind in einer endlosen Reihe in dem Umlaufschuh 2 geführt. Im Tragbereich ragen sie aus der Abdeckung des Umlaufschuhes 2 heraus und liegen in diesem Bereich an der Gegenlaufbahn der Leitschiene 1 an. Aus Figur 4 ist erkenntlich, daß es sich um einen Umlaufschuh 2 mit zwei Reihen von Wälzkörpern 4 beim vorliegenden Beispiel handelt.

Im etwa mittleren Bereich der Längserstreckung des Umlaufschuhs ist etwas versetzt zu dessen Mittenachse auf der Achse 31 eine Exzenter-Anordnung vorgesehen. Hierzu besitzt der Umlaufschuh 2 eine Durchgangsbohrung 5, in welche eine Exzenterbuchse 6 eingesetzt ist. Die Exzenterbuchse 6 hat eine zylindrische Außenfläche 8. Ihre Bohrung 7 ist exzentrisch zur zylindrischen Außenfläche 8 angeordnet. Die Exzenterbuchse 6 weist eine Bund 15 auf, welcher außen als Sechskant 16 zur Verdrehung der Exzenterbuchse 6 per Schraubenschlüssel ausgebildet ist.

In eine Bohrung 20 des Tragelementes 3 ist ein Zylinderbolzen 9, der einen Kopf 10 aufweist, eingesetzt. Der Zylinderbolzen 9 besitzt eine zylindrische Außenfläche 13, mit der er passend in der Bolzenbohrung 7 der Exzenterbuchse 6 und der Bohrung 20 aufgenommen ist.

Das dem Kopf 10 entfernt liegende Ende des Zylinderbolzens 9 ist mit einem Gewindeansatz 11 versehen, der aus der Exzenterbuchse 6 über den Bund 15 hervorragt, und auf den eine Mutter 12 aufschraubbar ist. Es ist erkennbar, daß über ein Verdrehen der Exzenterbuchse 6 eine Annäherung oder Entfernung des Umlaufschuhes 2 an die oder von der Leitschiene 1 weg bewerkstelligt werden kann. Es kann auf diese Art und Weise eine Spieleinstellung erfolgen. Da die Exzenterbuchse 6 im etwa mittleren Erstreckungsbereich des Umlaufschuhes 2 angebracht ist, kann sich auch die Wälzkörperreihe leicht an die Gegenlaufbahn der Leitschiene 1 anpassen. Die Einstellposition der Exzenterbuchse 6 und damit des Umlaufschuhes 2 wird z.B. durch ein Sicherungsblech 17 festgelegt, welches zwei Lappen 18,19 aufweist, von denen einer 18 an eine Schlüsselfläche 14 der Mutter 12 und der andere Lappen 19 an eine Werkzeugangriffsfläche des Außensechskant 16 des Bundes 15 der Exzenterbuchse 6 in Anlage bringbar ist. Hierdurch ist die Relativposition der Exzenterbuchse 6 zur Mutter bzw. zum Umlaufschuh 2 gesichert.

Zusätzlich ist eine Fixierstiftanordnung vorgesehen, die Fixierstifte 22 umfaßt, die versetzt zu der Durchgangsbohrung 5 auf der Achse 31 angeordnet sind. Hierzu weist der Umlaufschuh, wie aus Figur 4 ersichtlich, eine abgesetzte Fixierbohrung 21 auf, die einen Gewindeabschnitt 24 und einen Führungsabschnitt 25 umfaßt. Der Führungsabschnitt 25 ist als Zylinderbohrung ausgebildet. In die Fixierbohrung 21 ist ein Fixierstift 22 eingesetzt, der ebenfalls einen Gewindeschaftabschnitt 27 und einen Führungsschaftabschnitt 26 umfaßt. An seinem, dem Gewindeschaftabschnitt 27 abgewandten Ende weist der Fixierstift 22 einen sich zum Ende hin verjüngenden Konus 23 auf. Der Fixierstift 22 ist in die Fixierbohrung 21 mehr oder weniger tief einschraubbar, so daß der Konus 23 des Fixierstiftes 22 je nach Einschraubstellung mehr oder weniger aus dem Umlaufschuh 2 bzw. dessen Planfläche herausragt.

Der Konus 23 des Fixierstiftes 22 ist mit einer entsprechenden Konusbohrung 28 des Tragelementes 3 in Eingriff bringbar, so daß die Position des Umlaufschuhes 2 festlegbar ist. Je nach Relativstellung von Umlaufschuh 2 und damit Konus 23 zur Konusbohrung 28 im Tragelement 3 taucht der Konus 23 und der Fixierstift 22 mehr oder weniger tief in die Konusbohrung 28 ein. Aufgrund der Konusausbildung wird eine Überbrückung von Toleranzen erreicht. Trotzdem kann eine eindeutige Fixierposition durch Anlage des Konus 23 in der Konusbohrung 28 erreicht werden. Der größte Durchmesser der Konusbohrung 28 sollte daher zumindest gleichgroß wie der größte Durchmesser des Konus 23 ausgebildet sein, um einen angemessenen Verstellbereich erreichen zu können.

Wie aus Figur 3 erkennbar, sind zwei Fixierstifte 22 beabstandet zur Exzenteranordnung, also der Buchse 6 vorgesehen. Zwischen der Exzenterbuchse 6 und dem Fixierstift 22 ist eine Befestigungsschraube 29 angeordnet, die ebenfalls durch ein Sicherungsblech 30 in ihrer Befestigungsposition gegenüber dem Umlaufschuh 2 gesichert wird. Die Befestigungsschraube 29 hat einen Gewindeschaft, der kleiner bemessen ist, als die Bohrung im Umlaufschuh 2, durch die sie hindurchgesteckt ist, um die Verstellung des Umlaufschuhes 2 durch die Exzenterbuchse 6 nicht zu behindern.

Aufgrund der Exzenteranordnung mit der Exzenterbuche 6 und die Anordnung der Fixierstifte 22 ist eine Einstellbarkeit in einfacher Weise möglich. Desweiteren ist auch eine Nachstellung ohne großen Aufwand möglich.

Bezugszeichenliste

  1 Leitschiene
  2 Umlaufschuh
  3 Tragelement
  4 Wälzkörper
  5 Durchgangsbohrung
  6 Exzenterbuchse
  7 Bolzenbohrung
  8 Außenfläche der Exzenterbuchse
  9 Zylinderbolzen
  10 Kopf
  11 Gewindeansatz des Zylinderbolzens
  12 Mutter
  13 Außenfläche des Zylinderbolzens
  14 Schlüsselfläche
  15 Bund
  16 Außensechskant
  17 Sicherungsblech
  18 Lappen
  19 Lappen
  20 Einsteckbohrung
  21 Fixierbohrung
  22 Fixierstift
  23 Konus
  24 Gewindeabschnitt in der Fixierbohrung
  25 Führungsabschnitt in der Fixierbohrung
  26 Führungsschaftabschnitt des Fixierstiftes
  27 Gewindeschaftabschnitt des Fixierstiftes
  28 Konusbohrung
  29 Befestigungsschrauben
  30 Sicherungsblech
  31 Achse

32 starrer Umlaufschuh

## Ansprüche

1. Befestigung für den Umlaufschuh einer Wälzkörperführung an einem Tragelement mit Schrauben zur Verspannung von Umlaufschuh und Tragelement sowie Mitteln zur Fixierung der Einstellposition,
dadurch gekennzeichnet,
daß der Umlaufschuh (2) eine Durchgangsbohrung (5) aufweist, in die eine außen zylindrische Exzenterbuchse (6) eingesetzt ist, die eine Bolzenbohrung (7) besitzt, welche exzentrisch zur zylindrischen Außenfläche (8) der Exzenterbuchse (6) angeordnet ist, wobei ein am Tragelement (3) festgelegter Zylinderbolzen (9) in der Bolzenbohrung (7) passend aufgenommen ist,
daß zwei entgegengerichtet zur Durchgangsbohrung (5) versetzte, mit Gewinde versehene Fixierbohrungen (21) vorgesehen sind, in die jeweils ein Fixierstift (22) einschraubbar ist, dessen freies Ende als Konus (23) zum Ende hin verjüngt ausgebildet ist, der mit jeweils einer Konusbohrung (28) des Tragelementes (3) in Eingriff bringbar ist,
und daß dem Umlaufschuh (2) mindestens eine Befestigungsschraube (29) zugeordnet ist.

2. Umlaufschuh nach Aspruch 1,
dadurch gekennzeichnet,
daß die Exzenterbuchse (6) mit einem Bund (15) mit einer Werkzeugangriffsfläche, insbesondere einem Außensechskant (16), versehen ist.

3. Umlaufschuh nach Anspruch 1,
dadurch gekennzeichnet,
daß der Zylinderbolzen (9) an einem Ende mit einem Kopf (10) und am anderen Ende, insbesondere dem aus dem Umlaufschuh (2) herausragenden Ende, mit einem Gewindeansatz (11) versehen ist, auf den eine Mutter (12) aufschraubbar ist.

4. Umlaufschuh nach den Ansprüchen 2 und 3,
dadurch gekennzeichnet,
daß zwischen dem Bund (15) der Exzenterbuchse (6) und der Mutter (12) ein Sicherungsblech (17) auf dem Gewindeansatz (11) angeordnet ist, das zwei Lappen (18, 19) aufweist, von denen einer an einer Werkzeugangriffsfläche (16) des Bundes (15) und der andere an einer Schlüsselfläche (14) der Mutter (12) festgelegt ist.

5. Umlaufschuh nach Anspruch 1,
dadurch gekennzeichnet,
daß die Durchgangsbohrung (5) etwa mittig der Längserstreckung des Umlaufschuhes (2) und die Fixierstifte (22) und die Befestigungsschrauben (29) seitlich dazu versetzt angeordnet sind.

6. Umlaufschuh nach Anspruch 5,
dadurch gekennzeichnet,
daß die Befestigungsschrauben (29) jeweils zwischen der Durchgangsbohrung (5) und den Fixierstiften (22) angeordnet sind.

7. Umlaufschuh nach Anspruch 1,
dadurch gekennzeichnet,
daß für die Fixierstifte (22) eine Fixierbohrung (21) vorgesehen ist, welche einen Gewindeabschnitt (24) und einen zylindrischen Führungsabschnitt (25) umfaßt, und daß der Fixierstift (22) seinem Konus (23) benachbart zunächst einen zum Führungsabschnitt (25) passenden Führungsschaftabschnitt (26) und einen Gewindeschaftabschnitt (27) aufweist.

8. Umlaufschuh nach Anspruch 1,
dadurch gekennzeichnet,
daß der größte Durchmesser der Konusbohrung (28) im Tragelement (3) mindestens so groß ist, wie der größte Durchmesser des dem Fixierstift (22) zugehörigen Konus (23).

9. Umlaufschuh nach Anspruch 1,
gekennzeichnet
durch die Verwendung in einer Linearführungsanordnung, bei der diesem gegenüber ein Umlaufschuh (32) nicht einstellbar starr am Tragelement (3) befestigt ist.

<u>Fig. 1</u>

Fig. 2

Fig. 3

22

9

17

19

15

16

18

14

31

30

29

22

C

C

25

Fig. 4

3

26

21

27

28

23

24

22

Europäisches
Patentamt

# EUROPÄISCHER RECHERCHENBERICHT

Nummer der Anmeldung

EP 89 10 6718

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 389 501 (REY)<br>* Seite 3, rechte Spalte, Zeilen 12-16; Figur 7 *<br>--- | 1,2 | F 16 C 29/12 |
| A | CH-A- 330 241 (WORM)<br>* Seite 2, Zeilen 16-21; Figuren 3-5 *<br>--- | 1,2 | |
| A | US-A-4 557 530 (HAASE)<br>* Spalte 4, Zeile 16 - Spalte 5, Zeile 47; Figuren 1,3,5 *<br>--- | 1,5 | |
| A | FR-A-2 605 368 (DEMAY)<br>------ | | |

**RECHERCHIERTE SACHGEBIETE (Int. Cl.5)**

F 16 C
B 23 Q

Der vorliegende Recherchenbericht wurde für alle Patentansprüche erstellt

| Recherchenort | Abschlußdatum der Recherche | Prüfer |
|---|---|---|
| DEN HAAG | 23-10-1989 | BARON C. |